# EUROPEAN PATENT APPLICATION

(11) **EP 2 578 288 A1**
(43) Date of publication of application: **10.04.2013**
(21) Application number: 11786177.3
(22) Date of filing: 27.05.2011
(51) Int. Cl.: B01D 33/21, B01D 33/50

(54) **UNIT FOR THE ADVANCED PRETREATMENT OF WASTEWATER**

(30) Priority: 27.05.2010 ES 201000692
(71) Applicant: Equipos Tecnicos Para El Agua, S.L., 39600 Santander (ES)
(72) Inventor: MORCILLO BARJOLA, Manuel, E-39600 Santander (ES)
(74) Representative: Urizar Anasagasti, José Antonio
(86) International application number: PCT/ES2011/070386
(87) International publication number: WO 2011/148029

(57) **Abstract**

The invention relates to a unit for the advanced pretreatment of water using filter discs, said unit being formed by a cubic body supported by a structure, including a lower conical portion and comprising the injection of a stream of air. The unit is intended for the pretreatment of both untreated water and process water containing up to 2.500 mg/l SST, 1.380 mg/l DQO, and 20 ml V60. The unit provides removal values as high as up to 98% for V60, 95% for SST and 76% for DQO The unit includes: one or more filter discs (3) each comprising a circular support with blades (33), of a diameter determined according to the flow of water (10) and the amount of solids to be filtered; and a filter mesh disc (31) which can have different mesh openings of between 50 and 500 micrometers depending on the particle size of the solids (23). The advanced pretreatment unit comprises auxiliary cleaning devices (19) having deflection nozzles (19a) and cleaning is performed by means of the above-mentioned stream of air (12), which is introduced into the internal chambers (17), and the flow of water (10).

## Description

### Object of the invention

Development of a unit for advanced pre-treatment of untreated waters and processes waters comprising rotating discs as fundamental elements, with its own cleaning system (auto cleaners), capable of eliminating type V60, SST, DQO suspension contaminants of different particle sizes, as well as those contained in industrial and urban discharges of different origins.

### Background of the invention

Typically, treatment of wastewaters begins with initial physical separation of large solids (garbage) from the flow of domestic or industrial waters using a system of grills (meshes), even though said solids can be triturated by special equipment; applying afterwards a process of separation of very dense small sand like solids, followed by primary sedimentation (or similar treatment) separating existing suspended solids in wastewater.

Physical chemical treatment of waters according to type of water contaminants comprises the following possible stages:
- solids removal
- sand removal
- precipitation with or without aid of coagulants or flocculants (optional)
- solids separation and filtering

Primary treatment is used to reduce oils, greases, sands and thick solids. This step is totally mechanical, thus known as mechanical treatment.

Sand and stones present waters have to be removed on time during the process to prevent damage to pumps and other equipment employed in further stages of the treatment. Sand removal (also known as maceration) typically includes a sand channel wherein the speed of wastewaters can be carefully controlled allowing sand and stones present in said waters intake particles, while most of the organic material still remains in the flow.

To date, most of wastewater filtering systems consist of an arrangement of tanks wherein filtering occurs through physical chemical means. These filtering systems are widely known and do not interfere whatsoever with the object of the present invention.

On the other hand there are primary filtering systems based in a different type of procedures as sieves and rotating filters, based on different mesh openings, letting wastewaters get through and retaining suspended solids. Primary filtering systems in existing art in general only remove higher volume solids present in suspension. Regardless the use of these water treatment systems, none of them enables a reduction in further use of chemical reactives between 50 and 70%, nor a relatively low cost.

As a common characteristic to all existing processes in achieving a more effective removal these are complex systems mostly doing nothing more than preparing wastewaters for a biochemical filtering process wherein wastewaters are in fact prepared for secondary filtering and discharge into public sewer systems.

Filter disks are of interest as to the object of the present invention. The use of disks containing or carrying filtering materials is approached in many studies. U.S. Patent No. 2009139073 refers to filtering of storm waters only, wherein the main filtering portion is fabricated through irregularly oriented fibers and a binding agent providing the porosity that allows an unobstructed water flow. The filtering unit comprises diverse devices and a plurality of disks supporting said devices. Authors state the device is simple and easy to clean.

Document CN2877828 describes according to the authors a novel filter of simple structure, easy to clean and highly efficient as to water filtering. The unit comprises an upper and a lower disk with silk fiber as material, an elevation unit allowing fiber adjustment or loosening by rotation from the upper part to the bottom, and moving from the top down thus changing silk density.

Patent JP 2000042330 describes a typified filtering device provided with an outer disks' frame formed by supporting a disk provided with a filtering material, said frame having perforated disks in its front and back part, provided with nozzles located in the remaining part of the disks for cleaning purposes, thus eliminating filtering material obstructions in order to periodically regenerate same with gas or vapour at counter flow.

Patent US5975434 describes a device characteristic of axial flow with uniform flow distribution; the device is provided with a filtering means; from a pressure airtight frame having an inlet and an outlet, arranged substantially tangent to the inlet and the frame having a substantially cylindrical surface. The device has various axial porous disks internally arranged in the frame and with its circumferential sides and in total communication with the inner surface of said airtight frame. The device has a filtering means positioned in diverse regions defined by the porous disks and with at least one rigid radial disk with a group of openings. The device accomplishes a flow with increased general turbulence.

However, to date there is no simple advanced pre-treatment system or unit sufficiently efficient and versatile for primary purification of untreated waters and processes waters.

### DESCRIPTION OF THE INVENTION

To decrease or avoid defects of state of the art systems previously mentioned, the unit for advanced pre-treatment object of the invention destined to pre-treatment by primary filtering of waters from different sources, untreated waters and processes waters is presented.

The advanced pre-treatment unit comprises a cubic body, with its upper surface open and the lower part conical shaped thus enabling separation and pouring off of solid waste. The inlet of water to be purified incoming to the cubic body through a distributor Is provided over said upper part of the cubic body. Chambers behind the filter disks are sized as to allow a sufficient water income for solids separation. Water flows to be purified are typically from 1 to 250 m³/hour for each filter disk, depending on the filtering mesh openings, type of water to be filtered and disk size (typically from 1,200 mm or 900 mm in diameter). In conventional urban wastewaters medium flow to be treated by each filter disk can be established at 30m³/hour. Pressurized air injection to said filter disk inner part plays an important role in the performance of each advanced pre-treatment unit thus causing an auto cleaning effect thanks to this injection and to the flow of untreated water incoming through the distributor. The unit is capable of eliminating present solid waste, V60, SST of different particle sizes according to selected filtering mesh opening and significantly decreasing DQO, typically contained in different types of industry and urban discharges, etc.

This unit is completely built of stainless steel with laser cut material and Meccan type support thus avoiding welding and accomplishing a better finish. It is essential that the cone height should be sufficient to guarantee a 60° angle conditioning a better pouring off as well as an increase in the amount of recovered solids. The base of the conical part of the cubic body constitutes the decanter including a curved blade special knife valve of the cut up type to achieve greater evacuation easiness and regulation of poured off solids. That is, the vertex of the lower conical surface is open with a clamp installed in it with a knife valve of the cut up watertight type, with an actuator automatically allowing the controlled evacuation of said deposited solids. The valve with actuator is fed from the network in a regulated manner through the control panel. Retention of the filtered water volume is to be avoided as it provokes upward filtering clogging of the conical surface, having a spillway for such purposes.

The advanced pre-treatment unit of the present invention comprises as fundamental element filter disks; each filter disk is to be understood as the assembly formed by the circular support with blades and the axis coupled to the actuator and the steel filtering mesh (that might be of different openings between 50 and 500 microns) fixed to the circular support by a ring or clamp. Anyways, only a filter mesh disk is supported per assembly. However, each unit may have one or more filter mesh disk assemblies.

Inside the advanced pre-treatment unit cubic body said units of circular shape rotating filter disks are arranged parallel to the lateral faces of the unit, said units constituting the main element of the separation process. The diameter of the disks, depending on particle size and type of contaminants, effluent flow and other parameters, might be smaller or bigger, typically 900-1,200mm, to obtain a higher filtering capacity interval. The opening of the employed filter mesh depends on particle size and contaminants. Typical values range between 50 and 500 micrometers. As reference we assume the 250 microns mesh for conventional urban wastewaters.

Separation of deposited solids in the filter mesh occurs by injection of an air stream from the existing chamber in the back part of said filter disks and by the tangential oblique collision of water incoming through the distributor, and isolated regarding the conical area towards the central part of the cubic body. Said air injection performed by medium pressure turbines provided on said upper surface of the cubic body. Disks "auto-cleaning" is performed by air injection in the chamber with a 1,000 m³/hour injected flow for each turbine, and as a result of the tangential oblique collision of untreated water simultaneously incoming through the collector. In this manner, solids adhered to the mesh of fitter disks create a film that due to the outgoing air from the chamber partially fall off forming broken bubbles over said mesh surface. At the same time the wastewater flow outgoing through the distributor takes advantage of this effect sweeping all mesh surface, finishing fall off of the formed film in a clean manner.

The auxiliary cleaning device of the filter disk comprises an electro valve to control cleaning cycles, a pipe provided in the inside of each air injection chamber and nozzles, with three nozzles per filter disk to clean the inside of the filter disk towards the outside area of same, wherein the discharge is located, said nozzles distributed from the centre towards the upper part of said disk, at a proportional distance among them.

A spillway outlet is provided in the upper part of the conical body wherein water can be evacuated thus avoiding accidental flooding of said body. Outlets are located in the lateral walls of said cubic body, one for each chamber providing the evacuation of filtered water to the following stage of the cleansing process.

There is also a spillway outlet starting at the cubic body conical area so if there is an excess of accumulated solid material in this area or an increase in the incoming flow, said outlet enables the return to the beginning of the process avoiding flooding and allowing at the same time a more effective cleaning job of the disks.

Solid poured off waste is automatically evacuated through the valve with actuator to an extractable evacuation device, for example a filtering container, an evacuation device acting as complementary sieve since it should allow passage and thus, even separation of water dragged along by sedimented solids. When the extractable evacuation device is full it is easily extracted thanks to its support structure allowing its retrieval.

Water depuration depending on the specific case is sufficiently thorough, see following Table 1.

| | Reduction % | SST | DQO | V60 | RCETB, % |
|---|---|---|---|---|---|
| Filtering mesh opening | 380 microns | 17 | 12 | 80 | 14 |
| Filtering mesh opening | 250 microns | 33 | 27 | 84 | 23 |
| Filtering mesh opening | 180 microns | 49 | 39 | 89 | 31 |
| Filtering mesh opening | 120 microns | 61 | 52 | 95 | 44 |
| Filtering mesh opening | 50 microns | 95 | 76 | 98 | 54 |

| | | | | | |
|---|---|---|---|---|---|
| V60: sands, fibers and hairs; SST: total suspended solids; DQO: oxygen chemical demand. V60SSTDQO RCETB: energy costs reduction in biological RCETB treatment | | | | | |

Obtained results are more evident in following Chart 1.

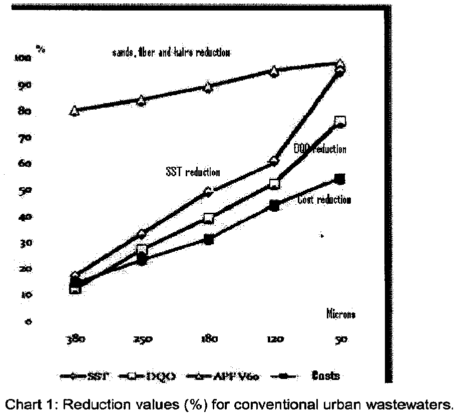

Analysis of the results presented in Table 1 and Chart 1 provides important information from a technological viewpoint. For a given value of V60 (sands, fibers and hairs) an important reduction of 80-85% is obtained for mesh opening values from 380-250 micrometers, a lower SST (total suspended solids) reduction even though significantly higher to that obtained with other systems, the reduction of DQO (oxygen chemical demand) behaving similarly to the SST reduction. According to water to be treated, if it presents a high V60 content and low SST, higher opening meshes can be used with the ensuing possible increase in water flow to be treated. On the contrary if SST values were significant, lower opening meshes would be necessary with the ensuing decrease in water flow to be treated. The reduction of energy costs obtained using the advanced pre-treatment unit of the present invention should be noted.

Thus, according to the specific problem and selecting a corresponding mesh opening, an adequate reduction is obtained as to specific ends desired, for example, sending it directly to the public sewage network, according to the specific legal regulation.

Finally based on the advanced pre-treatment unit of the present invention a Modular Pre-treatment System of untreated waters might be structured, as well as processes comprising a number of filtering units according to the necessary pre-treatment capacity and future needs.

Thanks to the described present process most of the solid waste present in wastewaters can be eliminated, according to the opening of the selected filtering mesh, leaving the water ready for a further chemical depuration phase, accomplishing in this manner a reduction between 50 and 70% in the use of reactives needed in further chemical treatments and a reduction of CO₂ emission levels generated during decomposition of organic matter in biological treatments as well as a reduction in energy costs.

### Description of the drawings

The accompanying drawings for illustrative and non limiting purposes complement the description of the present invention enabling a better comprehension of its characteristics.
Figure 1: is a schematic perspective view of the wastewater advanced pre-treatment unit, object of the present invention.
Figure 2: is a schematic cross sectional front view of the wastewater advanced pre-treatment unit, object of the present invention.
Figure 3: is a perspective disassembled view of a fitter disk of the advanced pre-treatment unit.
Figure 4: is a diagram of a water Advanced Pre-treatment Modular System based in four units of advanced pre-treatment.

### Preferred Embodiment of the Invention

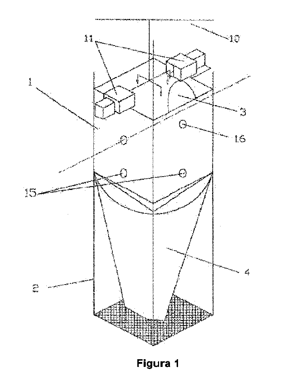

Figure 1 presents a perspective view of the unit completely built of stainless steel capable of filtering 30 m³/hour for each filter disk 3 of conventional urban wastewaters, said unit comprising a cubic body 1, 1,700 x 1,700 x 1,500 mm. and in its upper part two turbines 11 with an air capacity of 1,000 m³/hour per each turbine 11 and a filter disk 3, and the water distributor 10. The lower half part of said cubic body 1 hosts outgoing filtered water outlets 15 and outlet 16 parting from the cone, said outlet 16 having a spillway function; at the same time an upper segment of one of the two rotating filter disks 3 is observed from the top. The lower part of said cubic body 1 hosts support structure 2 providing as extracting filter means, a filter vessel 4 supported on a self carrying structure easily extracted when it becomes full of extracted solids from untreated water, said filter vessel 4 manufactured from a filtering Goth through which passes the washed down water with the solids.

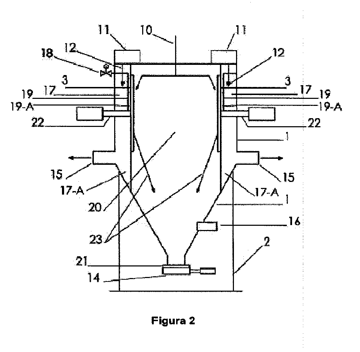

Figure 2 presents a cross sectional front view of body 1 of the advanced pre-treatment unit, provided with two 1,200 mm diameter filter rotating disks 3. Filter disk 3 means the assembly comprising the circular support with blades 33 and axis coupled to the actuator and the fitter mesh disk 31 (that might be of different openings between 50 to 500 microns) fixed to the circular support by ring or clamp. In the assembly only the filter mesh disk 31 is mounted. However, each device can carry one or more filter disk 3 assemblies.

Untreated waters incomes through a distributor 10 and is proportionally distributed between both said two rotating filter disks 3, colliding tangentially oblique on said rotating filter disks 3, actuated in their rotary motion each one of said disks 3 by a reducing engine 22, while a medium pressure turbine 11 for each filter disk 3, injects to said chambers 17, said 1,000 m³/hour air stream 12 at 10 mm for each turbine counter-current to the water, said stream 12 flowing through said filter disks 3 to the outside, towards the central area of body 1. Present solids 23 in untreated water adhere to disks 3 while filtered water passes to chambers 17 flowing through said disks 3 and outgoing through outlets 15 of said body **1.** Through the 30 m³/hour flow of conventional urban untreated water, incoming through distributor 10 and air stream 12 outgoing through said filter rotating disks 3, solids 23 fall off producing the so called "auto cleaning" effect inside said proper two disks 3, that is, "auto cleaning" of filter disks 3 happens by simultaneous effect of air injection through the chamber and oblique tangential collision of untreated water incoming through the distributor. Said solids 23 accumulate in central area 20 of body 1 pouring off towards the conical area, being evacuated through programmed drains through valve 14 fixed to the cone vertex by normalized clamp 21. To maintain a constant cleaning level of filter disks 3 an auxiliary cleaning device 19 is installed inside chamber 17. Said cleaning device 19 of said filter disks 3 comprises a control electro valve 18 of the cleaning cycles, an air injection pipe 12 provided inside each chamber 17 for inner sequential cleaning of said filter disks 3 towards outer areas 20 of said filter disks 3, provided of at least three deflecting nozzles 19a for each disk, distributed from the centre towards the upper part of said filter disks 3 at a distance and proportionally distributed from the centre towards the upper part of said disk 3 along its full length.

It should be noted that said inner chambers 17 are isolated regarding said lower conical part and said outer area or central part of equipment 20 of said body 1 and the volumes of said inner chambers 17 correspond at least to 12-17% of the volume of said outer areas 20; wherein volumes of bottoms 17a of said filter disks 3 correspond to at least 4-6% of said total volumes of said filter disks 3.

In case of excess flow there is provided an outlet 16 in the cone as spillway. The entire assembly is supported on said structure 2 that might adopt different shapes according to particular cases.

Said cleaning cycles are a series of injections of pressure water jets in the inner part 17 of filter disks 3 towards outer areas of said disks 3 to prevent accumulation of waste in the filtering mesh of said disks 3 during the filtering process, said cleaning cycles performed through a temporizer or a level gauge and using clean network water or the water filtered proper by the equipment.

It should be further noticed that volumes of said inner chambers 17 correspond at least to 12-17% of the volume of said outer area 20 of said filter disks 3, wherein volume of bottoms 17a of said inner chambers 17 correspond at least to 4-6% of the volume of said outer area 20 of said filter disks 3.

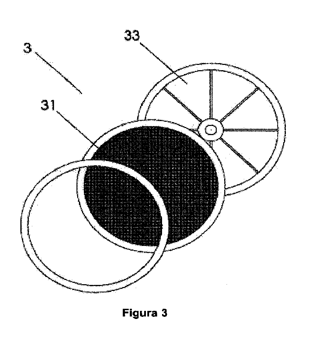

Figure 3 presents a disassembled rotating filter disk 3 comprising the circular support with blades 33 with a 1,200 mm diameter and the axis coupled to the actuator, and the filtering mesh disk 31 with a 250 micrometer opening, fixed to the circular support by a ring or clamp, wherein only one filtering mesh disk 31 is mounted per assembly.

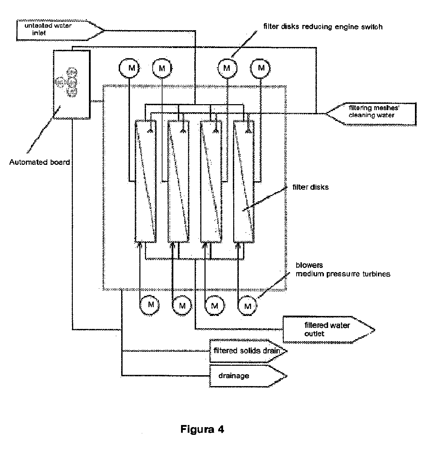

Based on the advanced pre-treatment units already described, a Modular System of unitary filtering capacity of crude waters as the sum of integrated units of advanced pre-treatment in said system is preferably configured. Figure 4 shows a scheme of the components of an Advanced Pre-treatment Modular System based on 4 units of advanced pre-treatment.

Untreated water incomes the cubic bodies 1 through a distributor 10. It flows through the filters of said rotating filter disks 3, actuated through reducing engines 22 and outgoes with a determined solids reduction according to mesh size of the filter mesh disk 31 used. The medium pressure turbines 11 inject an air stream through said filter disks 3 in a clockwise movement to incoming water. Retained solids in said filter disks 3 pour off to the bottom of said cubic bodies 1 draining them to an extraction filtering means 4 that might be a filtering vessel supported by a movable structure and discharged into waste containers by a crane or pulley, or other evacuation means, for example, a static sieving system that filters most of the water washed away by drained solids, provided with rotational sweepers that push said solids towards a perpetual screw conveyor to be discharged into a waste container according to the process used by each modular system in particular. Again, cleaning of said filter disks 3 is carried out by said auxiliary cleaning devices 19 of deflecting nozzles to programmed cycles and controlled for each drainage from the automated board. At the same time, the same outgoing drain of poured off solids is used to empty the assembly. The automated board regulating intervals between drains of poured off solids and duration of said drains as well as the possibility to carry out drainages and washing cycles of the metallic meshes at any time manually is shown.

Although the preferred embodiment of the filter unit of the present invention has been described with a determined configuration, details, materials and dimensions, it is obvious to those skilled in the art that modifications of configuration, materials and constructive details can be made without departing from the scope of the invention according to the following claims.

## Claims

1. A unit for advanced pre-treatment of waters by filter disks (3) comprising a cubic body (1) supported on a structure (2) with a lower conical part and injection of an air current (12) by turbines (11), said unit of advanced pre-treatment destined to pre-treatment of untreated waters as well as processes waters with values up to 2,500 mg/l in Total Suspended Solids (SST), 1,380 mg/l in DQO, 20 ml of Sedimentable Solids in 60 minutes (V60), and said unit obtaining removal values as high as 98% of V60, 95% of SST and 76% of DQO, **characterized by** comprising from one to various filter disks (3) said disks comprising their respective circular support with blades (33), of a diameter according to water flow (10) and the amount of solids to be filtered, the axis coupled to the actuator and a fitter mesh disk (31), with openings between 50 a 500 microns according to particle size of said solids (23), fixed to said circular support (33) by a ring or clamp; wherein only one said filter mesh disk is mounted (31) per filter disk (3); and **in that** said unit of advanced pre-treatment comprises the devices (19) for auxiliary cleaning with deflecting nozzles (19a) of said filter disks (3), and said cleaning performed by said air current (12), introduced in the inner chambers (17) provided behind said filter disks (3), and by the water flow (10).

2. The advanced pre-treatment unit of waters by filter disks (3) comprising a cubic body (1), supported on a structure (2) with a lower conical part and injection of an air current (12) according to claim 1 **characterized In that** said auxiliary cleaning device (19) of said filter disks (3) by water jet injection comprises some control electro valves (18) of the cleaning cycles, some pipes provided in the inside of each chamber (17) of water jet injection for inner washing of said filter disks (3) towards outer areas of said filter disks (3), in the central part (20) of said body (1), provided said pipes with at least three said deflecting nozzles (19a) per disk, distributed from the centre towards the upper part of said filter disks (3) at a proportional distance of its length; wherein said cleaning cycles comprise a series of water jet injections in the inner part (17) of the filter disks (3) towards the outer areas of said disks (3) to prevent accumulation of waste in said filter mesh disk (31) of said disks (3), said cleaning cycles performed by a temporizer or a level gauge by clean water from the network or the same water filtered by said advanced pre-treatment unit.

3. The advanced pre-treatment unit of waters by filter disks (3) comprising a cubic body (1) supported on a structure (2), with a lower conical part and injection of an air current (12) according to claim 1 **characterized in that** said inner chambers (17) are isolated regarding said lower conical part and said outer area or central part of the equipment (20) of said body (1) and the volumes of said inner chambers (17) correspond at least to 12-17% of the volume of said outer areas (20); wherein volumes of the bottoms (17a) of said filter disks (3) correspond at least to 4-6% of total volumes of said filter disks (3).

4. The advanced pre-treatment unit of waters by filter disks (3) comprising a cubic body (1) supported on a structure (2), with conical lower part and injection of an air current (12) according to claim 1 **characterized in that** on said body (1) there is provided a distributor (10) proportionally distributing the untreated water colliding tangentially oblique on said rotating filter disks (3), actuated by a reducing engine (22) and also, on said body (1) there are provided said turbines (11) of medium pressure injecting said air current (12) to said chambers (17) and **in that**, present solids (23) in untreated water are retained in said filter disks (3) while filtered water flows to said chambers (17) and exits through outlets (15).

5. The advanced pre-treatment unit of waters by filter disks (3) comprising a cubic body (1) mounted on a structure (2) with a conical lower part and injection of an air current (12) according to claim 1 **characterized In that** solids (23) are removed from said filter disks (3) by means of the flows coming from untreated water from the distributor (10) and the air (1 2), by said air injection (12) counter-current to said untreated water (10) through chamber (17) and by way of the simultaneous tangential and oblique collision of said untreated water (10) against said rotating filter disks (3) causing a superficial sweep of said disks (3) and causing the pouring off of said solids (23) adhered to the filters, towards said lower conical part of said cubic body (1), said flows (10, 12) thus producing an auto cleaning effect of said filter disks (3); wherein, in case of an excess of said flow (10) there is provided in said lower conical part a spillway outlet (16).

6. The advanced pre-treatment unit of waters by filter disks (3) comprising a cubic body (1) with a conical lower part and injection of an air current (12) according to claim 1 **characterized in that** said sedimented solids (23) are evacuated from said lower conical part by programmed drains through the open/close valve (14) actuated in pneumatic or electric mode, fixed to the vertex of the cone by a clamp (21) normalized to an extraction means (4); said extraction means (4) being a movable, filtering and dischargeable vessel, or a static filtering element provided with rotating sweepers and endless screw conveyor.

7. The advanced pre-treatment unit of waters by filter disks (3) comprising a cubic body (1) with a conical lower part and injection of an air current (12) according to claim 1 **characterized In that** said filter disks (3) are comprising a circular support frame (33) with blade structure and a filter mesh disk (31) with possibility of different openings fixed to the circular support by a ring or clamp.

8. Advanced pre-treatment modular system of untreated waters and process **characterized in that** said advanced pre-treatment modular system comprises at least two said water filter units through one or more said filter disks (3), comprising each one a cubic body (1) supported on a structure (2) with a lower conical part, injection of an air current (12) to each one of said filter disks (3); provided said filter units of said auxiliary cleaning device (19) of said filter disks (3) and said inner chambers (17); and **in that**, solids (23) are removed from said filter disks (3) by the action of flows coming from untreated water of a distributor (10) and the air (12) by said air injection (12) counter-current to said untreated water (19) through chamber (17).
